(19) Europäisches Patentamt / European Patent Office / Office européen des brevets

(11) **EP 4 538 658 A1**

(12) **EUROPEAN PATENT APPLICATION**

(43) Date of publication:
**16.04.2025 Bulletin 2025/16**

(21) Application number: **24200989.2**

(22) Date of filing: **18.09.2024**

(51) International Patent Classification (IPC):
**G01H 1/00** (2006.01)   **G01M 13/028** (2019.01)
**G01M 99/00** (2011.01)

(52) Cooperative Patent Classification (CPC):
**G01H 1/003; G01M 13/028; G01M 99/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.10.2023 JP 2023176708**

(71) Applicant: **ASAHI-SEIKI MANUFACTURING CO., LTD.**
**Owariasahi-shi**
**Aichi 488-8655 (JP)**

(72) Inventor: **NAKAZAKI, Yasuo**
**Owariasahi-shi, 488-8655 (JP)**

(74) Representative: **Kramer Barske Schmidtchen**
**Patentanwälte PartG mbB**
**European Patent Attorneys**
**Landsberger Strasse 300**
**80687 München (DE)**

(54) **DATA EXTRACTION DEVICE AND ABNORMALITY MONITORING DEVICE**

(57) In a data extraction device (30) of the present invention, an envelope spectrum that is an envelope-processed wave spectrum is used as data for abnormality determination. The data for abnormality determination is less affected by noise as compared with the related art that directly uses a vibration wave spectrum, and the accuracy of abnormality determination is enhanced. The envelope spectrum in a limited frequency range including a frequency of a specific wave in the envelope-processed waves is extracted as the data for abnormality determination. Data not used for the abnormality determination is eliminated, and the abnormality determination is facilitated. The frequency of the specific wave even when changing with a change in the rotational frequency of a bearing (94) is calculated from the rotational frequency of the bearing (94) to determine the limited frequency range. The abnormality determination can be easily performed without being affected by the change in the rotational frequency of the bearing (94).

FIG. 3

EP 4 538 658 A1

# Description

## BACKGROUND OF THE INVENTION

### (1) Field of the Invention

The present invention relates to a data extraction device that extracts data for abnormality determination of a rotary component of a monitored machine, and an abnormality monitoring device including such a data extraction device.

### (2) Description of Related Art

As this type of abnormality monitoring device, a device is known that performs abnormality determination based on a spectrum of vibration waves during rotation of a rotary component of a monitored machine (see, for example, JP 2001-99757 A (claim 1, paragraph [0005])).

## SUMMARY OF THE INVENTION

However, it is difficult for a conventional abnormality monitoring device to perform accurate abnormality determination due to a large influence of noise included in vibration waves. Therefore, the present application discloses a technique that enables improvement in accuracy of abnormality determination as compared with the related art.

One aspect of the present invention is a data extraction device that extracts data for abnormality determination of a rotary component of a monitored machine, the data extraction device including: an envelope processing unit configured to perform envelope processing on a vibration wave during rotation of the rotary component to obtain an envelope-processed wave; a spectrum calculation unit configured to calculate an envelope spectrum that is a spectrum of the envelope-processed wave; a basic data storage unit configured to store ratio data for specifying a ratio between a frequency of a specific wave among a plurality of types of waves included in the envelope-processed wave when the rotary component rotates with a predetermined reference rotational frequency, and the predetermined reference rotational frequency; a frequency calculation unit configured to calculate, as a real specific frequency, the frequency of the specific wave when the rotary component rotates with a real rotational frequency that is an actual rotational frequency of the rotary component based on the real rotational frequency and the ratio data; and a data extraction unit configured to extract, as the data for abnormality determination, the envelope spectrum in a limited frequency range including the real specific frequency from the envelope spectrum when the rotary component rotates with the real rotational frequency.

## BRIEF DESCRIPTION OF THE DRAWINGS

FIG. 1 is a schematic view of a monitored machine;
FIG. 2 is a circuit diagram illustrating a configuration of an abnormality monitoring device;
FIG. 3 is a block diagram illustrating the configuration of the abnormality monitoring device;
FIG. 4 is a graph of an envelope spectrum of vibration waves of the monitored machine; and
FIG. 5 is a graph illustrating an example of a deterioration shock wave.

## DETAILED DESCRIPTION OF PREFERRED EMBODIMENTS

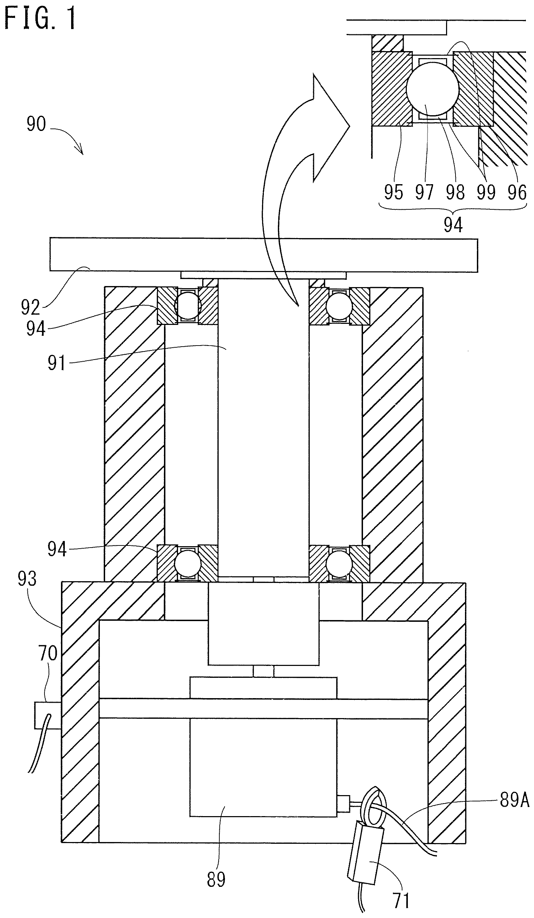

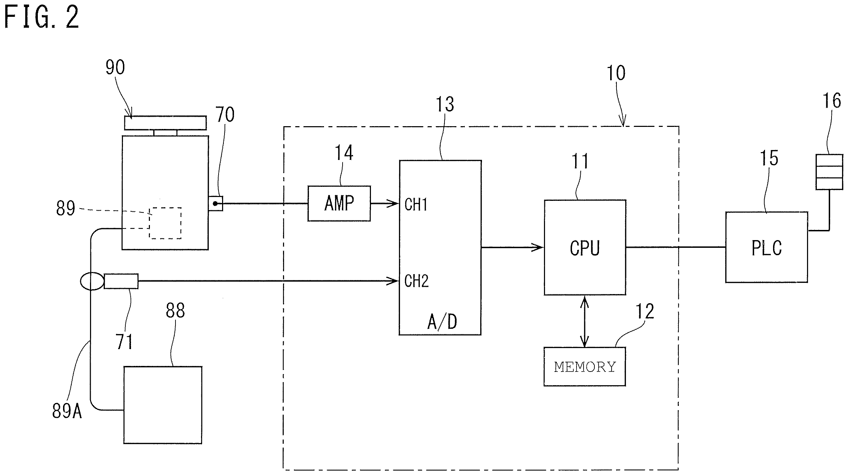

An abnormality monitoring device 10 according to an embodiment of the present invention will be described with reference to FIGS. 1 to 5. FIG. 1 illustrates a monitored machine 90 monitored by the abnormality monitoring device 10. The monitored machine 90 is, for example, a grinding device, which includes a rotary shaft 91 extending in a vertical direction, a disk-shaped grindstone 92 fixed to an upper end portion of the rotary shaft 91, a support base 93 that rotatably supports two positions of the rotary shaft 91 in the vertical direction via a pair of bearings 94, a motor 89 that is a drive source of the monitored machine 90, and a controller 88 (see FIG. 2) that controls the motor 89.

A plurality of rotary components included in the monitored machine 90, such as the motor 89, the rotary shaft 91, and the pair of bearings 94 described above, rotate with any desired rotational frequency (rotational speed) according to an operation on the controller 88. A deviation between the center of gravity and the rotation center of each rotary component generates a vibration wave (hereinafter, referred to as "eccentric wave" as appropriate) having a frequency unique to each rotary component. Vibration waves during an operation of the monitored machine 90 include a plurality of types of waves (hereinafter, referred to as "machining strain wave" as appropriate) caused by non-circularity, surface roughness, and the like at a contact portion between the rotary components. The vibration waves during the operation of the monitored machine 90 further include a wave caused by deterioration of the rotational contact portion.

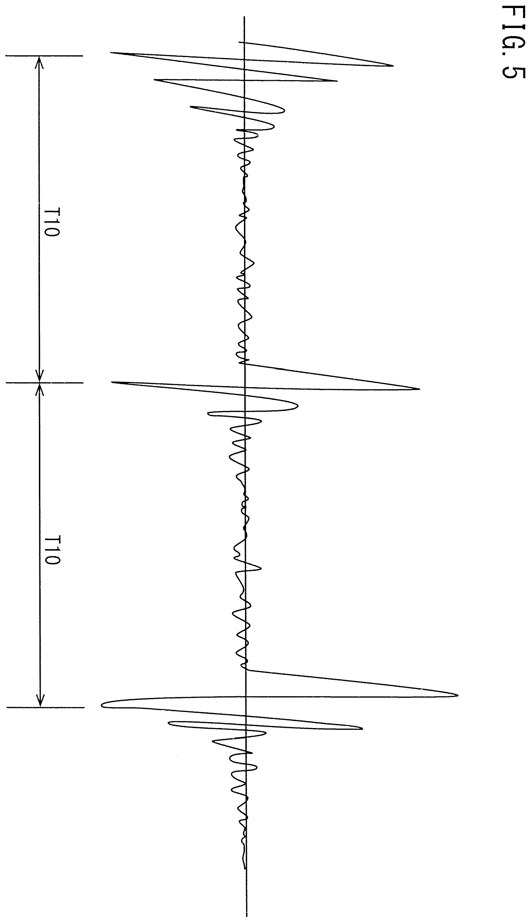

Specifically, the pair of bearings 94 described above is typical ball bearings of the same type. As illustrated in FIG. 1, for example, each bearing 94 includes an inner ring 95, an outer ring 96, a plurality of balls 97 disposed between circumferential surfaces of the inner and outer rings 95 and 96, a holder 98 that holds the plurality of balls 97 at equal intervals, and a pair of seal rings 99 for holding grease between the inner ring 95 and the outer ring 96. These components are in rotational contact with each other. In a case where a part of the inner ring 95 or the outer ring 96 has a deteriorated portion such as a scratch, a dent, or peeling, a shock wave (hereinafter, referred to as "deterioration shock wave" as appropriate) is generated every time the ball 97, the holder 98, or the seal ring 99 collides with the deteriorated portion. As conceptually illustrated in FIG. 5, such a deterioration shock wave is generated at intervals of a generation cycle T10 corresponding to a relative rotational speed (hereinafter, simply referred to as "rotational speed of the bearing 94") between the inner ring 95 and the outer ring 96, and has a frequency unique to a specific component such as the inner ring 95 or the holder 98. Although a shock wave having a frequency unique to each component is also generated by irregularities due to a normal machining error, that shock wave is still smaller than the deterioration shock wave.

Meanwhile, the deterioration starts from approximately the same position in any bearing 94. The bearings 94 of the same type have the same generation period T10 described above. The frequencies unique to some components of the bearings 94 resonating by the collision are also the same. Therefore, when the type of the bearing 94 is known, the progress of deterioration can be examined by examining a change in the magnitude of the deterioration shock wave in advance.

However, as described above, the vibration waves during the operation of the monitored machine 90 include various types of waves such as the eccentric wave and the machining strain wave in addition to the deterioration shock wave. In a power spectrum obtained by performing FFT processing on the vibration waves during the operation of the monitored machine 90, information of the deterioration shock wave as illustrated in FIG. 5 does not remarkably appear, and it is difficult to extract such information therefrom. Furthermore, the rotational speed of the bearing 94 is also changed as desired, and the generation cycle T10 of the deterioration shock wave is also changed accordingly. As a result, even if the information of the deterioration shock wave remarkably appears in the power spectrum, it is difficult to extract the information of the deterioration shock wave from the power spectrum. That is, it is difficult for a conventional device to monitor the abnormality of the bearing 94 of the monitored machine 90. Therefore, the abnormality monitoring device 10 of the present embodiment is used to monitor the abnormality of the bearing 94 of the monitored machine 90.

In order to monitor the abnormality by the abnormality monitoring device 10, an acceleration sensor 70 for detecting acceleration in a direction perpendicular to an axial direction of the rotary shaft 91 is attached to the support base 93 of the monitored machine 90. A clamp meter 71 is attached to a power line 89A of the motor 89. Respective detection results of the acceleration sensor 70 and the clamp meter 71 are input to the abnormality monitoring device 10.

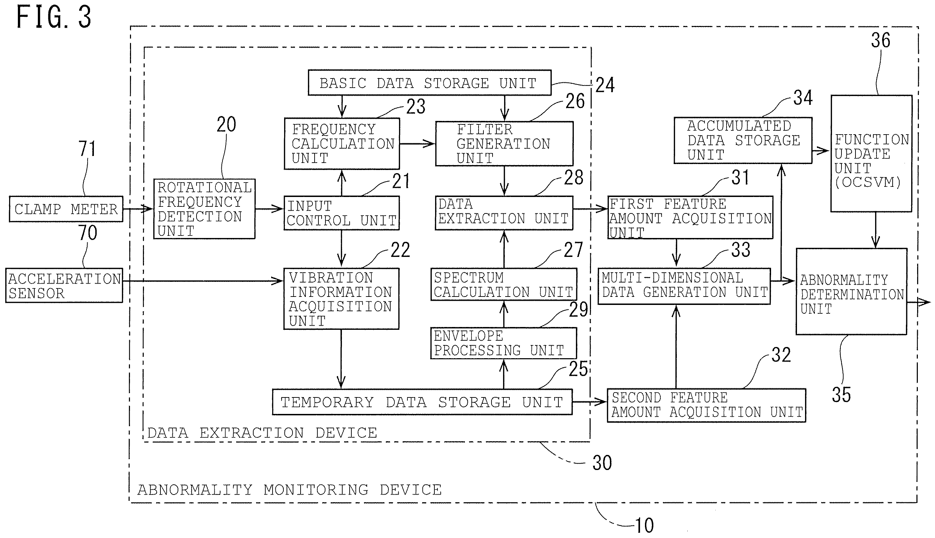

As illustrated in FIG. 2, the abnormality monitoring device 10 includes a CPU 11, a memory 12, an A/D converter 13, and an amplifier 14. The CPU 11 executes a program (not illustrated) stored in the memory 12 to provide the entire abnormality monitoring device 10 with a plurality of functional units such as a rotational frequency detection unit 20, an input control unit 21, a vibration information acquisition unit 22, a frequency calculation unit 23, a basic data storage unit 24, a temporary data storage unit 25, a filter generation unit 26, a spectrum calculation unit 27, a data extraction unit 28, and an envelope processing unit 29 illustrated in a block diagram of FIG. 3.

The rotational frequency detection unit 20 is constituted by the A/D converter 13 and the CPU 11, and takes the detection result of the clamp meter 71 into the CPU 11 through the A/D converter 13. The rotational frequency detection unit 20 calculates a real rotational frequency that is an actual (real) rotational frequency of the motor 89 during driving on the basis of a change in a drive current applied to the motor 89 detected by the clamp meter 71. More specifically, the motor 89 of the monitored machine 90 of the present embodiment is an AC motor, and rotates with a rotational frequency corresponding to a frequency of an AC current that is the drive current applied to the motor 89. The rotational frequency detection unit 20 calculates the frequency of the drive current from the change in the drive current detected by the clamp meter 71 to calculate the real rotational frequency of the motor 89 from that frequency. In the present embodiment, the rotational frequency of the bearing 94 and the rotational frequency of the motor 89 are the same.

The clamp meter 71 may be attached, not to the power line 89A of the motor 89, but to a control line for switching control of an inverter circuit that is a drive circuit of the motor 89. In addition, for example, in a case where the controller 88 outputs information of the rotational frequency of the motor 89, the information of the rotational frequency of the motor 89 output by the controller 88 may be input to the abnormality monitoring device 10 instead of using the clamp meter 71.

Furthermore, instead of the rotational frequency of the motor 89, for example, a rotation sensor such as a resolver may be provided on the rotary shaft 91, and a detection result of the rotational frequency of the rotary shaft 91 may be taken into the abnormality monitoring device 10.

The input control unit 21 determines whether the monitored machine 90 is operating on the basis of whether the real rotational frequency calculated by the rotational frequency detection unit 20 is equal to or less than a predetermined reference value. When the monitored machine 90 is operating, the input control unit 21 gives a data acquisition command to the vibration information acquisition unit 22 and the frequency calculation unit 23. Thereafter, while the monitored machine 90 is continuously operating, the input control unit 21 gives a data acquisition command to the vibration information acquisition unit 22 and the frequency calculation unit 23 every time a predetermined data acquisition cycle (for example, 1 hour) elapses.

The vibration information acquisition unit 22 is constituted by the amplifier 14, the A/D converter 13, and the CPU 11 described above. Upon receiving the data acquisition command, the vibration information acquisition unit 22 amplifies a detection signal of the acceleration sensor 70 by the amplifier 14, and samples the amplified detection signal with a predetermined sampling frequency (for example, 15 to 30 [kHz]) by the A/D converter 13 to acquire a plurality of pieces of acceleration data for a predetermined time (for example, 10 to 40 [s]). The vibration information acquisition unit 22 also causes the temporary data storage unit 25 to store the plurality of pieces of acquired acceleration data as an acceleration data file with acquisition date and time information.

The envelope processing unit 29 performs envelope processing on vibration waves specified by the data of the acceleration data file to obtain envelope-processed waves. Specifically, the plurality of pieces of acceleration data specify a change in acceleration over time. The plurality of pieces of acceleration data constitute vibration data. The envelope processing unit 29 performs the envelope processing on the vibration waves specified by the vibration data to obtain the envelope-processed waves.

The spectrum calculation unit 27 performs spectrum analysis processing (FFT) on the envelope-processed waves to calculate an envelope spectrum that is a spectrum of the envelope-processed waves.

The data extraction unit 28 extracts, as data for abnormality determination, the envelope spectrum in a limited frequency range from a lower limit frequency Fb to an upper limit frequency Ft determined on the basis of data in the basic data storage unit 24 as described below, from the envelope spectrum calculated by the spectrum calculation unit 27.

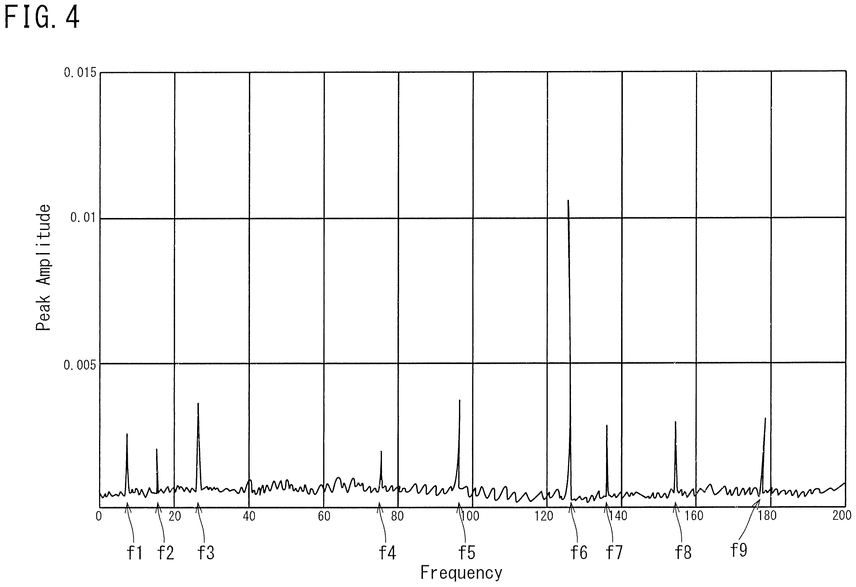

The basic data storage unit 24 stores ratio data for specifying a ratio between a frequency of a specific wave among a plurality of types of waves included in the envelope-processed waves when the bearing 94 rotates with a predetermined reference rotational frequency, and the reference rotational frequency. Specifically, FIG. 4 illustrates an envelope spectrum when the bearing 94 rotates with the reference rotational frequency. The envelope spectrum of the envelope-processed waves includes information of a plurality of types of waves having frequencies f1 to f9. These waves include, for example, the above-described deterioration shock wave indicated by the frequency f6. In the monitored machine 90 that has not been deteriorated, it is possible to know the frequency of the deterioration shock wave when the bearing 94 rotates with the reference rotational frequency from the envelope spectrum based on the vibration waves of the monitored machine 90 using the bearing 94 of the same type as that of this monitored machine 90. In the following description, data extraction of a wave having the same frequency as the "deterioration shock wave" is performed on the assumption of the "deterioration shock wave" even before the occurrence of deterioration. Therefore, in the present embodiment, the wave having the same frequency as the "deterioration shock wave" is referred to as "specific wave". The basic data storage unit 24 stores ratio data K1 obtained by Formula described below where K1 is the ratio data, N1 is the reference rotational frequency, and f6 is the frequency of the specific wave at the reference rotational frequency.

$$K1 = f6/N1 \quad \cdots \text{Formula 1}$$

The above ratio data may be any data that can specify the ratio between the reference rotational frequency and the frequency of the deterioration shock wave at the reference rotational frequency. For example, two values of the reference rotational frequency and the frequency may be used as the ratio data, or the ratio data may be obtained by dividing the frequency of the specific wave by the rotational frequency of the motor 89.

Upon receiving the data acquisition command, the frequency calculation unit 23 calculates, as a real specific frequency, the frequency of the specific wave when the motor 89 rotates with the real rotational frequency. Specifically, the frequency calculation unit 23 calculates a real specific frequency Fr by Formula 2 described below where N2 is the real rotational frequency calculated by the rotational frequency detection unit 20, Fr is the real specific frequency, and K1 is the ratio data as described above.

$$Fr = K1 \cdot N2 \; [Hz] \quad \cdots \text{Formula 2}$$

The filter generation unit 26 generates a filter by adding a preset allowable error to the real specific frequency Fr. Specifically, the basic data storage unit 24 stores the allowable error. Here, the filter generation unit 26 calculates the upper limit frequency Ft and the lower limit frequency Fb by Formula 3 and Formula 4 described below where Fw is the allowable error, Ft is the upper limit frequency, and Fb is the lower limit frequency.

$$Ft = Fr + Fw \; [Hz] \; \cdots \text{Formula 3}$$

$$Fb = Fr - Fw \; [Hz] \; \cdots \text{Formula 4}$$

Here, the upper limit frequency Ft and the lower limit frequency Fb are set to a magnitude that allows only the wave having a specific frequency (the frequency f6 in the present embodiment) to be extracted from a plurality of waves having a relatively large spectrum value of the envelope spectrum, such as the waves having the frequencies f1 to f9 illustrated in FIG. 4, among the plurality of types of waves. That is, the "limited frequency range" means a range for extracting the wave having a specific frequency from the plurality of types of waves.

In the present embodiment, in the abnormality monitoring device 10, the rotational frequency detection unit 20, the input control unit 21, the vibration information acquisition unit 22, the frequency calculation unit 23, the basic data storage unit 24, the temporary data storage unit 25, the filter generation unit 26, the spectrum calculation unit 27, the data extraction unit 28, and the envelope processing unit 29 described above constitute a data extraction device 30. Even when an operation speed of the monitored machine 90 is changed as necessary, the data extraction device 30 can select and extract, as the data for abnormality determination, the envelope spectrum of the specific frequency necessary for determining the abnormality of the bearing 94 from the plurality of types of vibrations. A first feature amount acquisition unit 31, a second feature amount acquisition unit 32, a multi-dimensional data generation unit 33, an accumulated data storage unit 34, an abnormality determination unit 35, a function update unit 36, and the like of the abnormality monitoring device 10 can determine the abnormality using the data for abnormality determination.

The first feature amount acquisition unit 31 acquires, as a feature amount 1, a value obtained by standardizing a peak value of the data for abnormality determination (that is, a peak value of the envelope spectrum in the limited frequency range).

The second feature amount acquisition unit 32 calculates, as a feature amount 2, a kurtosis in a statistical distribution of the plurality of pieces of acceleration data in the acceleration data file.

The multi-dimensional data generation unit 33 generates two-dimensional multi-dimensional data having, as its components, the feature amount 1 and the feature amount 2 based on the common acceleration data file, causes the accumulated data storage unit 34 to store the generated multi-dimensional data, and deletes the acceleration data file as a generation source of the multi-dimensional data from the temporary data storage unit 25. As a result, the accumulated data storage unit 34 accumulates a plurality of pieces of the multi-dimensional data as the operation time of the monitored machine 90 elapses.

The abnormality determination unit 35 determines whether newly-generated multi-dimensional data is abnormal. To this end, the abnormality determination unit 35 uses a function for abnormality determination generated in advance by machine learning using one-class support vector machine (OCSVM) to determine whether the new multi-dimensional data is abnormal.

Here, the OCSVM is a known technique described in, for example, "Support Vector Machine" (ISBN 978-4-06-152906-9 by Ichiro Takeuchi and Masayuki Karasuyama), which is a non-patent literature. The OCSVM acquires a plurality of pieces of multi-dimensional data (can also be called "vector data" because of being multi-dimensional) having a plurality of feature amounts as their components, and generates a function for abnormality determination that is a vector function. At this time, each feature amount is preferably standardized and used on the basis of the accumulated feature amounts.

The new multi-dimensional data is input to the abnormality determination unit 35 as the function for abnormality determination. When the output of the function is "negative", the abnormality determination unit 35 outputs a determination result that the new multi-dimensional data is abnormal, that is, "the monitored machine 90 is abnormal". When the output of the function is not "negative", the abnormality determination unit 35 outputs a determination result that the multi-dimensional data is normal, that is, "the monitored machine 90 is normal". The output of the abnormality determination unit 35 is taken into a PLC 15 (see FIG. 2) of a system including the monitored machine 90. In a case where it is determined that there is an abnormality, a warning lamp 16 is turned on.

In a case where the abnormality monitoring device 10 is shipped together with the monitored machine 90, it is preferable that the monitored machine 90 is operated for a predetermined time or longer before shipment, and the abnormality determination unit 35 is provided with the function for abnormality determination by machine learning. However, the function for abnormality determination obtained by machine learning by the operation of another monitored machine 90 having the same structure may be copied to a new abnormality monitoring device 10. It is also possible to cause the abnormality determination unit 35 to perform machine learning of the function for abnormality determination by operating the monitored machine 90 for a predetermined time or longer after shipment of the abnormality monitoring device 10 and the monitored machine 90, and then use the function for abnormality determination for the abnormality determination of the abnormality monitoring device 10.

The function update unit 36 recalculates and updates the function for abnormality determination by adding the multi-dimensional data that is newly stored in the accumulated data storage unit 34 to the plurality of pieces of multi-dimensional data that is already stored in the accumulated data storage unit 34.

A configuration of the abnormality monitoring device 10 according to the present embodiment has been described above. Next, operational effects of the abnormality monitoring device 10 according to the present embodiment will be described. As described above, in the data extraction device 30 of the present embodiment, the envelope spectrum that is the spectrum of the envelope-processed waves obtained by performing the envelope processing on the vibration waves is used as the data for abnormality determination. Therefore, the data for abnormality determination is less affected by noise as compared with the related art that directly uses the spectrum of the vibration waves as the data for abnormality determination, and the accuracy of the abnormality determination is enhanced. In addition, instead of using the entire envelope spectrum of the vibration waves as the data for abnormality determination, the envelope spectrum in the limited frequency range including the frequency of the specific wave among the plurality of types of waves included in the envelope-processed waves is extracted as the data for abnormality determination. Therefore, data not used for the abnormality determination is eliminated, and the abnormality determination is facilitated. Moreover, even when the frequency of the specific wave changes with a change in the rotational frequency of the bearing 94, the frequency of the specific wave is calculated from the rotational frequency of the bearing 94 to determine the limited frequency range. Therefore, by using the data extraction device 30 of the present embodiment, it is possible to easily perform the abnormality determination without being affected by the change in the rotational frequency of the bearing 94.

By simply attaching the clamp meter 71 to the power line 89A of the motor 89 that is the drive source of the monitored machine 90, the information of the real rotational frequency N2 of the rotational operation of the motor 89 can be taken in. This makes it unnecessary to greatly change the monitored machine 90 in order to attach the abnormality monitoring device 10.

The abnormality determination unit 35 of the abnormality monitoring device 10 is provided with the function for abnormality determination obtained by machine learning using the plurality of pieces of multi-dimensional data having the peak value of the envelope spectrum in the limited frequency range described above as one of the plurality of feature amounts. It is determined whether the monitored machine 90 is abnormal on the basis of the output of the function when new multi-dimensional data is input to that function. This makes it possible to easily perform the abnormality determination of the monitored machine 90 whose operation speed changes. In addition, since the function update unit 36 updates the function for abnormality determination by using the OCSVM on the new multi-dimensional data, the accuracy of the abnormality determination is improved as the operation time of the monitored machine 90 becomes longer. Furthermore, the plurality of feature amounts include the kurtosis specifying the statistical distribution of the plurality of pieces of acceleration data that is measured as the vibration data, whereby the accuracy of the abnormality determination can be enhanced.

[Other Embodiments]

Although the data extraction device 30 of the above embodiment extracts, as the data for abnormality determination, the envelope spectrum of one type of wave included in the plurality of types of vibration waves generated in the monitored machine 90 when the motor 89 is driven, the envelope spectrum of a plurality of types of waves may be extracted as the data for abnormality determination.

The abnormality monitoring device 10 of the above embodiment includes the function for abnormality determination generated using the OCSVM, but may include a function for abnormality determination generated by multivariate analysis other than the OCSVM. The abnormality determination may also be performed by providing a predetermined reference value without performing the multivariate analysis. Specifically, for example, the abnormality determination may be performed on the basis of whether the peak value of the data for abnormality determination that is extracted by the data extraction device 30 is larger than a preset reference value.

The abnormality monitoring device 10 of the above embodiment performs the abnormality determination by using the multivariate analysis (specifically, the OCSVM) on the multi-dimensional data having, as its components, the feature amounts 1 and 2 of the output of the monitored machine 90 (specifically, vibrations output from the monitored machine 90). Alternatively, the abnormality monitoring device 10 may perform the abnormality determination by using the multivariate analysis on multi-dimensional data having, as its components, feature amounts of both the output and the input of the monitored machine 90. Specifically, the abnormality determination using the multivariate analysis may be performed on multi-dimensional data having, as its components, a feature amount of a power supply amount to the motor 89, which is the input of the monitored machine 90, and a feature amount of vibrations, which is the output of the monitored machine 90.

Although the multi-dimensional data of the above embodiment is two-dimensional, the multi-dimensional data may be three-dimensional or more.

The abnormality monitoring device 10 of the above embodiment determines the abnormality of the bearing 94 of the monitored machine 90, but may determine the abnormality of a rotary component other than the bearing. Specifically, the abnormality monitoring device may determine the abnormality of a rotary component rotatably supported on a fluid bearing or a metal bearing, or a rotary component such as a screw or a propeller rotating in a fluid.

In the above embodiment, the grinding device is exemplified as the monitored machine 90. However, for example, a pressing machine may be used.

<Note>

Hereinafter, a feature group extracted from the above embodiment will be described while showing effects and the like, as necessary. In the following, for easy understanding, corresponding components in the above embodiment will be appropriately indicated in parentheses or the like, but this feature group is not limited to the specific components indicated in the parentheses or the like.

[Feature 1]

A data extraction device (30) that extracts data for abnormality determination of a rotary component (94) of a monitored machine (90), the data extraction device (30) including: an envelope processing unit (29) configured to perform envelope processing on a vibration wave during rotation of the rotary component (94) to obtain an envelope-processed wave; a spectrum calculation unit (27) configured to calculate an envelope spectrum that is a spectrum of the envelope-processed wave; a basic data storage unit (24) configured to store ratio data (K1) for specifying a ratio between a frequency (f6) of a specific wave among a plurality of types of waves included in the envelope-processed wave when the rotary component (94) rotates with a predetermined reference rotational frequency (N1), and the predetermined reference rotational frequency (N1); a frequency calculation unit (23) configured to calculate, as a real specific frequency (Fr), the frequency (f6) of the specific wave when the rotary component (94) rotates with a real rotational frequency (N2) that is an actual rotational frequency of the rotary component (94) based on the real rotational frequency (N2) and the ratio data (K1); and a data extraction unit (28) configured to extract, as the data for abnormality determination, the envelope spectrum in a limited frequency range including the real specific frequency (Fr) from the envelope spectrum when the rotary component (94) rotates with the real rotational frequency (N2).

[Feature 2]

The data extraction device (30) according to feature 1, wherein the monitored machine (90) includes a motor (89) as a drive source, a clamp meter (71) is attached to a power line (89A) or a control line of the motor (89), and the data extraction device (30) includes a rotational frequency detection unit (20) configured to calculate the real rotational frequency (N2) of the rotary component (94) from a change in a current detected by the clamp meter (71) .

[Feature 3]

An abnormality monitoring device (10) including an abnormality determination unit (35) that has finished machine learning of a function for abnormality determination to determine whether multi-dimensional data having, as components, a plurality of feature amounts based on an output or an input of a monitored machine (90) including a rotary component (94) is abnormal by acquiring a plurality of pieces of the multi-dimensional data, the abnormality monitoring device (10) determining whether the monitored machine (90) is abnormal based on an output of the function when new multi-dimensional data is input to the function, the abnormality monitoring device (10) including the data extraction device (30) according to feature 1 or 2, wherein the plurality of feature amounts include a peak value of the envelope spectrum in the limited frequency range.

[Feature 4]

The abnormality monitoring device (10) according to feature 3, wherein the function is obtained by machine learning using OCSVM.

[Feature 5]

The abnormality monitoring device (10) according to feature 4, including a function update unit (36) configured to update the function by using the OCSVM on the multi-dimensional data that is newly taken in.

[Feature 6]

The abnormality monitoring device (10) according to any one of features 3 to 5, wherein the plurality of feature amounts include a kurtosis, a standard deviation, or other statistical values specifying a statistical distribution of a vibration wave during rotation of the rotary component (94).

In the data extraction device of feature 1, the envelope spectrum that is the spectrum of the envelope-processed waves obtained by performing the envelope processing on the vibration waves is used as the data for abnormality determination. Therefore, the data for abnormality determination is less affected by noise as compared with the related art that directly uses the spectrum of the vibration waves, and the accuracy of the abnormality determination is enhanced. In addition, instead of using the entire envelope spectrum of the vibration waves as the data for abnormality determination, the envelope spectrum in the limited frequency range including the frequency of the specific wave among the plurality of types of waves included in the envelope-processed waves is extracted as the data for abnormality determination. Therefore, data not used for the abnormality determination is eliminated, and the abnormality determination is facilitated. Moreover, even when the frequency of the specific wave changes with a change in the rotational frequency of the rotary component, the frequency of the specific wave is calculated from the rotational frequency of the rotary component to determine the limited frequency range. Therefore, by using the data extraction device of feature 1, it is possible to easily perform the abnormality determination without being affected by the change in the rotational frequency of the rotary component.

According to feature 2, by simply attaching the clamp meter to the power line or the control line of the motor that is the drive source of the monitored machine, the information of the real rotational frequency of the rotary component can be taken in.

The abnormality determination unit of the abnormality monitoring device of feature 3 includes the function for abnormality determination obtained by machine learning using the plurality of pieces of multi-dimensional data having the peak value of the envelope spectrum in the limited frequency range described above as one of the plurality of feature amounts. It is determined whether the monitored machine is abnormal on the basis of the output of the function when new multi-dimensional data is input to that function. This makes it possible to easily perform the abnormality determination of the monitored machine whose operation speed changes.

Here, the function for abnormality determination may be obtained by machine learning using the OCSVM as in the abnormality monitoring device of feature 4, may be obtained by machine learning by a multivariate analysis method other than the OCSVM, or may be obtained by learning in advance by artificial intelligence including a neural network.

According to feature 5, since the function update unit updates the function for abnormality determination by using the OCSVM on a new multi-dimensional data, the accuracy of the abnormality determination is improved as the operation time of the monitored machine becomes longer.

The plurality of feature amounts include the kurtosis, the standard deviation, or other statistical values specifying the statistical distribution of the vibration waves during rotation of the rotary component as in feature 6, whereby the accuracy of the abnormality determination can be enhanced.

Although the present specification and the drawings disclose specific examples of the technique included in the claims, the technique described in the claims is not limited to these specific examples, and includes those obtained by variously modifying and changing the specific examples, and also includes those obtained by singly extracting a part from the specific examples.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A data extraction device (30) that extracts data for abnormality determination of a rotary component (94) of a monitored machine (90), the data extraction device (30) comprising:

an envelope processing unit (29) configured to perform envelope processing on a vibration wave during rotation of the rotary component (94) to obtain an envelope-processed wave;
a spectrum calculation unit (27) configured to calculate an envelope spectrum that is a spectrum of the envelope-processed wave;
a basic data storage unit (24) configured to store ratio data (K1) for specifying a ratio between a frequency (f6) of a specific wave among a plurality of types of waves included in the envelope-processed wave when the rotary component (94) rotates with a predetermined reference rotational frequency (N1), and the predetermined reference rotational frequency (N1);
a frequency calculation unit (23) configured to calculate, as a real specific frequency (Fr), the frequency (f6) of the specific wave when the rotary component (94) rotates with a real rotational frequency (N2) that is an actual rotational frequency of the rotary component (94) based on the real rotational frequency (N2) and the ratio data (K1); and
a data extraction unit (28) configured to extract, as the data for abnormality determination, the envelope spectrum in a limited frequency range including the real specific frequency (Fr) from the envelope spectrum when the rotary component (94) rotates with the real rotational frequency (N2).

2. The data extraction device (30) according to claim 1, wherein

the monitored machine (90) includes a motor (89) as a drive source,
a clamp meter (71) is attached to a power line (89A) or a control line of the motor (89), and
the data extraction device (30) comprises a rotational frequency detection unit (20) configured to calculate the real rotational frequency (N2) of the rotary component (94) from a change in a current detected by the clamp meter (71).

3. An abnormality monitoring device (10) comprising an abnormality determination unit (35) that has finished machine learning of a function for abnormality determination to determine whether multi-dimensional data having, as components, a plurality of feature amounts based on an output or an input of a monitored machine (90) including a rotary component (94) is abnormal by acquiring a plurality of pieces of the multi-dimensional data, the abnormality monitoring device (10) determining whether the monitored machine (90) is abnormal based on an output of the function when new multi-dimensional data is input to the function, the abnormality monitoring device (10) comprising

the data extraction device (30) according to claim 1 or 2, wherein
the plurality of feature amounts include a peak value of the envelope spectrum in the limited frequency range.

4. The abnormality monitoring device (10) according to claim 3, wherein the function is obtained by machine learning using one-class support vector machine (OCSVM).

5. The abnormality monitoring device (10) according to claim 4, comprising a function update unit (36) configured to update the function by using the OCSVM on the multi-dimensional data that is newly taken in.

6. The abnormality monitoring device (10) according to any one of claims 3 to 5, wherein the plurality of feature amounts include a kurtosis, a standard deviation, or other statistical values specifying a statistical distribution of a vibration wave during rotation of the rotary component (94) .

FIG. 1

# FIG. 2

FIG. 3

ABNORMALITY MONITORING DEVICE

DATA EXTRACTION DEVICE

EP 4 538 658 A1

12

FIG. 4

FIG. 5

T10

T10

Europäisches
Patentamt

European
Patent Office

Office européen
des brevets

# EUROPEAN SEARCH REPORT

Application Number

EP 24 20 0989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 916 535 B (HEBEI JIANTOU ENERGY INVEST CO LTD) 9 August 2022 (2022-08-09) | 1,3,6 | INV. G01H1/00 |
| Y | * figures 1-12 * | 3-5 | G01M13/028 |
| A | * paragraphs [0034] - [0040], [0062] - [0088], [0090] - [0094], [0101] - [0118] * | 2 | G01M99/00 |
| X | JP 2019 027860 A (NSK LTD) 21 February 2019 (2019-02-21) | 1 | |
| Y | * figures 1-9 * | 3 | |
| A | * paragraphs [0025] - [0026], [0032] - [0034], [0060] - [0087] * | 2,4-6 | |
| X | US 2018/335366 A1 (QIAO WEI [US] ET AL) 22 November 2018 (2018-11-22) | 1,2 | |
| Y | * figures 1,4-9 * | 3 | |
| A | * paragraphs [0031] - [0035], [0048] - [0053], [0063] - [0079] * | 4-6 | |
| Y | YANG LUOXIAO ET AL: "Wind Turbine Gearbox Failure Detection Based on SCADA Data: A Deep Learning-Based Approach", IEEE TRANSACTIONS ON INSTRUMENTATION AND MEASUREMENT, IEEE, USA, vol. 70, 18 December 2020 (2020-12-18), pages 1-11, XP011830134, ISSN: 0018-9456, DOI: 10.1109/TIM.2020.3045800 [retrieved on 2021-01-08] | 4,5 | TECHNICAL FIELDS SEARCHED (IPC) G01H G01M |
| A | * abstract * * paragraphs [00II], [III.D] * | 1-3,6 | |

The present search report has been drawn up for all claims

| Place of search | Date of completion of the search | Examiner |
|---|---|---|
| The Hague | 22 January 2025 | Sartoni, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 0989

22-01-2025

| Patent document cited in search report | | Publication date | Patent family member(s) | | Publication date |
|---|---|---|---|---|---|
| CN 113916535 | B | 09-08-2022 | NONE | | |
| JP 2019027860 | A | 21-02-2019 | JP 6958068 | B2 | 02-11-2021 |
| | | | JP 2019027860 | A | 21-02-2019 |
| US 2018335366 | A1 | 22-11-2018 | US 2018335366 | A1 | 22-11-2018 |
| | | | US 2021108988 | A1 | 15-04-2021 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001099757 A

**Non-patent literature cited in the description**

- **ICHIRO TAKEUCHI** ; **MASAYUKI KARASUYAMA**. *Support Vector Machine*, ISBN 978-4-06-152906-9